# EUROPEAN PATENT APPLICATION

(11) **EP 4 644 288 A1**
(43) Date of publication of application: **05.11.2025**
(21) Application number: 25183419.8
(22) Date of filing: 14.11.2023
(51) Int. Cl.: B65D 88/14, B65D 88/52, B65D 88/54

(54) **LOCKING ARRANGEMENT, FOLDABLE RAMP AND COLLAPSIBLE AIR CARGO CONTAINERS**

(30) Priority: 17.11.2022 GB 202217206
(62) Divisional of application: 23813033.0
(71) Applicant: F. Klucznik & Son Limited, Adderley Green Stoke-on-Trent, Staffordshire ST3 5BW (GB)
(72) Inventor: HALL, Graham, Stoke-on-Trent, ST3 5BW (GB)
(74) Representative: Swindell & Pearson Limited

(57) **Abstract**

A collapsible air cargo container, wherein the collapsible air cargo container comprises: a floor; a first end frame, comprising a first portion and a second portion, wherein the first portion of the first end frame is rotatably connected to the second portion of the first end frame, and the second portion of the first end frame is fixedly connected to the floor; a second end frame comprising a first portion and a second portion, wherein the first portion of the second end frame is rotatably connected to the second portion of the second end frame, and the second portion of the second end frame is fixedly connected to the floor; a first side panel, comprising a first portion and a second portion, wherein the first portion of the first side panel is rotatably connected to the second portion of the first side panel, and the second portion of the first side panel is fixedly connected to the floor; a second side panel, comprising a first portion and a second portion, wherein the first portion of the second side panel is rotatably connected to the second portion of the second side panel, and the second portion of the second side panel is fixedly connected to the floor; and a roof panel, rotatably connected to either the first portion of the first side panel or the first portion of the second side panel, wherein at least one of the first portion of the first side panel, the first portion of the second side panel, the roof panel and / or the roof panel comprise a plurality of sub-portions, wherein the sub-portions are independently deployable during the assembly of the collapsible air cargo container, and / or are independently stowable during collapsing of the air cargo container.

## Description

### TECHNICAL FIELD

The present disclosure relates to a collapsible air cargo container. In particular, but not exclusively, it relates to a collapsible air cargo container for transporting horses.

### BACKGROUND

Cargo carried by civil aircraft may be stored within air cargo containers. These containers may have predefined exterior shapes such that the containers may make efficient use of the interior space of the aircraft.

Specific types of air cargo container are known. These include air cargo containers specifically adapted for transporting live animals, such as horses.

Transporting an empty air cargo container, for example, to a destination at which a live animal may be collected, is space inefficient.

Assemblable and / or disassemblable air cargo containers have therefore been developed.

It is an aim of the present invention to address one or more of the disadvantages associated with the prior art.

### SUMMARY OF THE INVENTION

According to some aspects, there is provided the subject matter of the independent claims. Some further aspects are defined in the dependent claims.

Within the scope of this application, it is expressly intended that the various aspects, embodiments, examples and alternatives set out in the preceding paragraphs, in the claims and/or in the following description and drawings, and in particular the individual features thereof, may be taken independently or in any combination that falls within the scope of the appended claims. That is, all embodiments and/or features of any embodiment can be combined in any way and/or combination that falls within the scope of the appended claims, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
FIG. 1A illustrates a view of an example of the collapsible air cargo container in an assembled state;
FIG. 1B illustrates a view of an example of the collapsible air cargo container in a collapsed state;
FIG. 2A illustrates an example first assembly stage of an example of the collapsible air cargo container;
FIG. 2B illustrates an example second assembly stage of the example collapsible air cargo container;
FIG. 2C illustrates an example third assembly stage of the example collapsible air cargo container;
FIG. 2D illustrates an example fourth assembly stage of the example collapsible air cargo container;
FIG. 2E illustrates an example fifth assembly stage of the example collapsible air cargo container;
FIG. 3A illustrates an example assembly stage of a second example of the collapsible air cargo container;
FIG. 3B illustrates an example second assembly stage of the second example of the collapsible air cargo container;
FIG. 3C illustrates an example third assembly stage of the second example of the collapsible air cargo container;
FIG. 3D illustrates an example fourth assembly stage of the second example of the collapsible air cargo container;
FIG. 3E illustrates an example fifth assembly stage of the second example of the collapsible air cargo container;
FIG 4 illustrates a side view of an example of the air cargo container, illustrating example ramp orientations.
FIG. 5A illustrates an example of a first embodiment of a locking arrangement for the air cargo container in a first configuration;
FIG. 5B illustrates an example of a first embodiment of a locking arrangement for the air cargo container in a second configuration;
FIG. 5C illustrates an example of a first embodiment of a locking arrangement for the air cargo container in a third configuration;
FIG. 5D illustrates an example of a first embodiment of a locking arrangement for the air cargo container in a fourth configuration;
FIG. 5E illustrates an example of a first embodiment of a locking arrangement for the air cargo container in a fifth configuration;
FIG. 5F illustrate a cross-section of a first embodiment of the locking arrangement for the air cargo container in the fifth configuration;
FIG. 6A illustrates an example of a second embodiment of a locking arrangement for the air cargo container in a first configuration;
FIG. 6B illustrates an example of a second embodiment of a locking arrangement for the air cargo container in a second configuration;
FIG. 6C illustrates an example of a second embodiment of a locking arrangement for the air cargo container in a third configuration;

### DETAILED DESCRIPTION

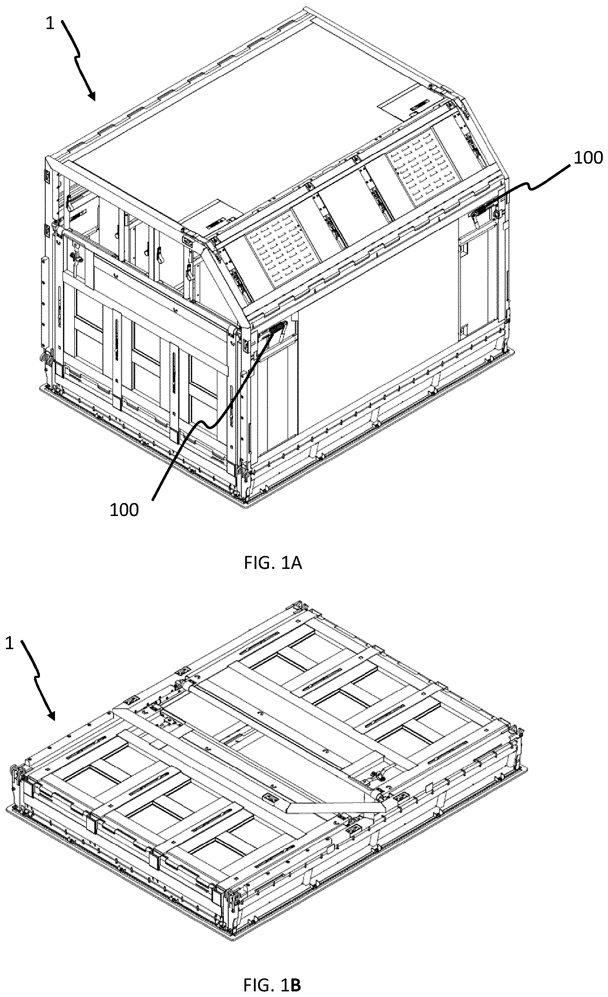

As is illustrated in FIG. 1A and FIG 1B, the collapsible air cargo container has two states: an assembled state (FIG. 1A) and a collapsed state (FIG. 1B).

In the context of this application, "collapsible" refers to the capability of the air cargo container to be collapsed, rather than the air cargo container when it is only in its collapsed state.

Once assembled, the collapsible air cargo container may be used for transporting at least one animal, such as at least one horse, on an aircraft.

When assembled, the collapsible air cargo container 1 comprises two ends, two sides, a roof and a floor. When assembled, ingress and egress of a horse into and out of the collapsible air cargo container is via at least one ramp. The at least one ramp is located at at least one of the ends of the collapsible air cargo container.

In some embodiments, ingress of the horse into the air cargo container 1 is via a first ramp, while egress of the horse out of the collapsible air cargo container is via a second ramp. In these embodiments,. the first ramp and second ramp are at opposing ends of the air cargo container. Use of a first ramp and a second ramp permits ingress and egress of the horse from the container, without requiring the horse to move in a backwards direction.

As illustrated in FIG. 1B, when collapsed, the collapsed collapsible air cargo container is substantially cuboid in shape, and occupies a reduced volume relative to the assembled collapsible air cargo container of FIG. 1A. This is because although the area and dimensions of the floor remain unchanged, the height of the collapsed air cargo container is reduced relative to the height of the assembled air cargo container. The substantially cuboid shape of the collapsed air cargo container may enable several containers to be stacked on top of each other, for either storage or transportation within an aircraft. This enables a more efficient use of space within the aircraft fuselage.

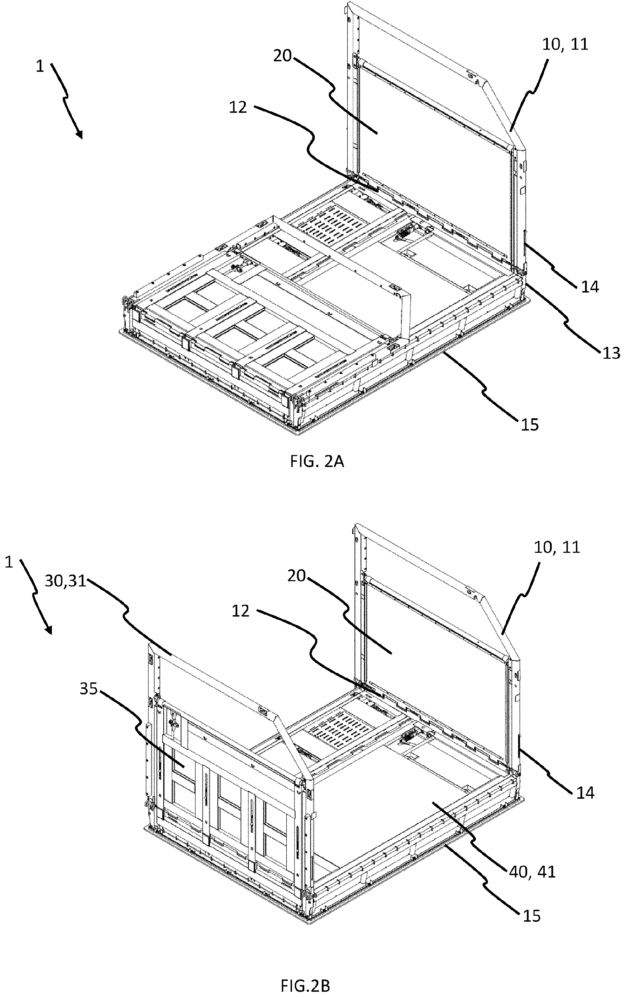

FIGS. 2A - 6C illustrate various features for the assembly of examples of the collapsible air cargo container from its collapsed state of FIG. 1B to its assembled state of FIG 1A. It may be understood that collapsing the assembled collapsible air cargo container is the reverse of assembly.

FIG. 2A illustrates a first stage of assembly of an example of the collapsible air cargo container 1, in which a first portion 11 of a first end frame 10 of the air cargo container 1 is rotated by approximately 90° from a stowed configuration on a top surface of the collapsed air cargo container 1 (as illustrated in FIG. 1B), to a deployed configuration, in which the first portion 11 of the first end frame 10 is substantially vertical. As is illustrated by FIG. 2A, a first portion of a first ramp 20 is rotated to remain in plane with the first portion 11 of the first end frame 10, to also be substantially vertical.

This is achieved by rotation of the first portion 11 of the first end frame 10 about hinges 12 which rotatably connect the first end portion 11 with a second end portion 13 of the first end frame 10. The second end portion 13 of the first end frame 10 is substantially vertical (i.e., it is substantially perpendicular to the floor), and is fixedly connected to the floor 15 of the container 1.

As illustrated in FIG 2A, the first portion 11 of the first end frame 10 may be profiled, such that the perimeter of the first end frame adopts a similar shape to the interior profile of the aircraft fuselage in which the air cargo container is to be transported once it is assembled. In other examples, the profile of the first end frame may be different to that illustrated in FIG. 2A. For example, the profile of the first end frame may be rectangular. The profile of the perimeter of the first end frame is such that it may follow the adjacent interior profile of the aircraft fuselage in which the assembled air cargo container is to be transported.

Once the first portion 11 of the first end frame 10 has been moved to its deployed configuration, securing means 14 may be used to lock the first portion 11 in position.

Securing means 14 may comprise any suitable means. For example, securing means 14 may comprise latch bolts which interconnect the first portion 11 and second portion 13 of the first end frame 10. The securing means 14 prevent rotation of the first portion 11 of the first end frame 10 relative to the second end portion 13 when the first portion 11 of the first end frame 10 is in its deployed configuration.

FIG. 2B illustrates a further stage of assembly, in which a second end frame 30 and optionally, a second ramp 35, have been rotated from a stowed configuration to a deployed configuration. The second end frame 30 has the same features as the first end frame 10. The optional second ramp 35 has the same features as the first ramp 20.

Once the end frames 10, 30 are in their deployed orientations, stowed panels which will form the sides and roof of the assembled air cargo container may be re-orientated from their stowed configurations to their deployed configurations during the assembly of the collapsible air cargo container 1.

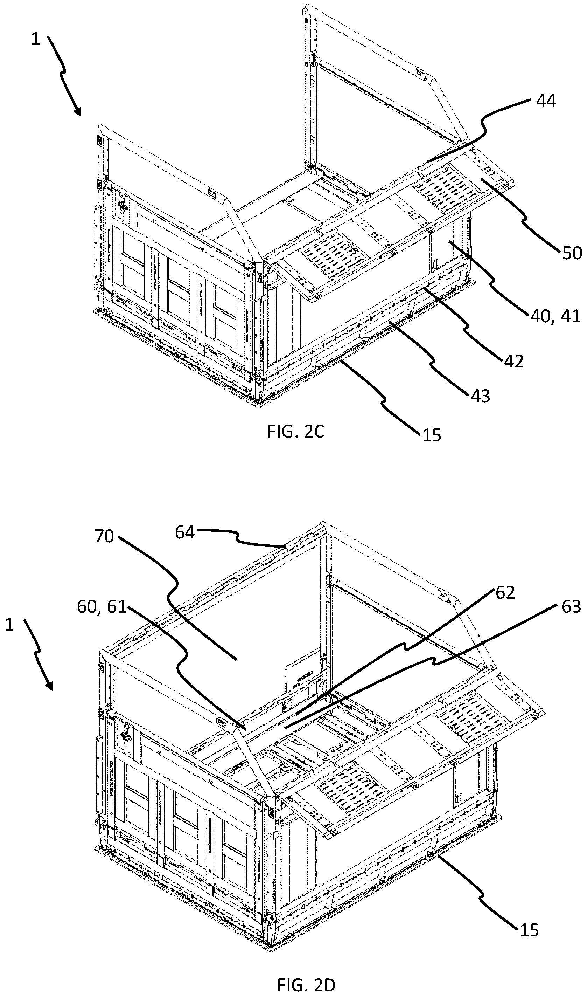

FIG. 2C illustrates the subsequent assembly of a first side panel 40 of the collapsible air cargo container from its stowed configuration. In the example illustrated in FIG 2C, the first side panel 40, comprises a first portion 41 and a second portion 43. The first side portion 41 and second side portion 43 are rotatably connected by a first side hinge 42.

The second portion 43 of the first side panel 40 is fixedly connected to the floor 15 proximal to the perimeter of the floor 15. The second potion 43 of the first panel 40 is substantially vertical, being substantially perpendicular to the plane of floor 15. The first side hinge 42 that rotatably connects the first and second portions of the first side panel 40 has an axis that is substantially parallel to a side edge of floor 15 and substantially perpendicular to end frame hinges 12.

In the example illustrated in FIG 2C, the first portion 41 of the first side panel 40 is also rotatably connected by a second side hinge 44 to an inclined side panel (a contour panel) 50. Hinges 42 and 44 are located at opposing edges of the first portion 41 of first side panel 40. In some embodiments, the inclined panel may not be present.

In FIG 2D, a second side panel 60 has been rotated from its collapsed orientation, to its assembled orientation. Second side panel 60 comprises a first portion 61 and a second portion 63. The first portion 61 of the second side panel 60 is rotatably connected by a third side hinge 62 to the second potion 63 of the second side panel 60.

The second portion 63 of the second side panel 60 is fixedly connected to the floor 15 proximal to the perimeter of the floor 15. The second potion 63 of the second panel 60 is substantially vertical, being substantially perpendicular to the plane of floor 15. The third side hinge 62 that rotatably connects the first and second portions of the second side panel has an axis that is substantially parallel to a side edge of floor 15 and substantially perpendicular to end frame hinges 12.

FIG. 2D also illustrates an example roof panel 70. In FIG. 2D, roof panel 70 is shown in a partially-assembled configuration, lying substantially hanging substantially vertically, and parallel to first portion 61 of second side panel 60. It may be appreciated that during assembly and / or collapsing of the collapsible air cargo container, a temporary securing means (not shown), such as a strap or latch, may be used to hold roof panel 70 parallel to the first portion 61 of second side panel 60, as first portion 61 of second side panel 60 is rotated about third side hinge 62.

In the example of FIG. 2D, the first portion 61 of the second side panel 60 is rotatably connected by a fourth side hinge 64 to the roof panel 70. Hinges 62 and 64 are located at opposing edges of the first portion 61 of second side panel 60.

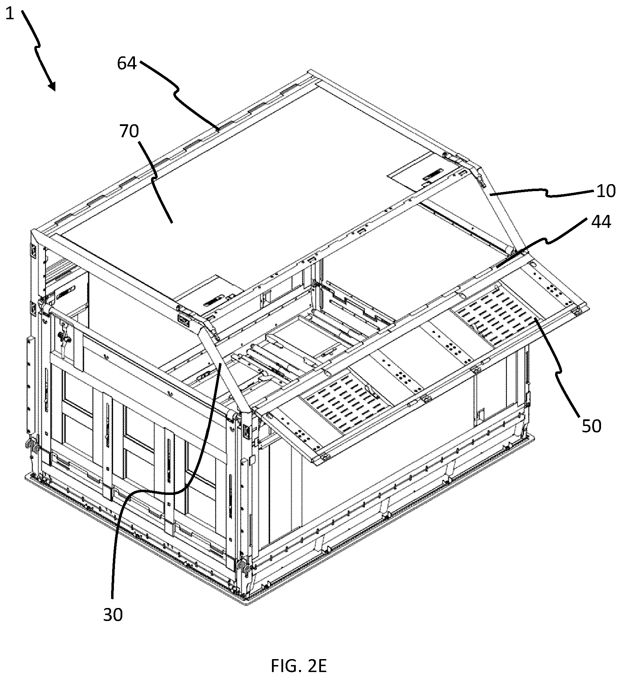

As illustrated by FIG 2E, roof panel 70 may then be rotated about fourth side hinges 64 to its assembled position, lying in the plane of top portions of first end frame 10 and second end frame 30. Contour panel 50 may then be rotated about second side hinge 44 to form the assembled configuration of FIG 1A.

The heights of the second portions of the first end frame, second end frame, first side panel and second side panel may be different. This permits the respective first portions of the first end frame, second end frame, first side panel and second side panel to overlay, in parallel planes, when the collapsible air cargo container is in its collapsed state.

The means by which adjacent components (for example first portion 41 of first side panel 40 and / or first port 11 of first end frame 10 may be connected is subsequently disclosed.

Adjacent components may be connected by at least one locking arrangement 100.

In examples, the first end frame 10 provides an anchoring reference frame. In such examples, the first portion 11 of the first end frame 10 and a third side panel such as the first portion of the first ramp 20 are configured to rotate independently about a common axis provided by hinge 12. Additionally or alternatively, the second end frame 30 may provide an anchoring reference frame, such that the first end portion 31 of the second end frame 30 and a fourth side panel such as the first portion of the second ramp 35 are configured to rotate independently about a common axis provided by hinge 32.

The anchoring reference frame(s) provided by the first end frame and/or the second end frame aids assembly of the collapsible container by providing a stable frame to which the various panels may be connected during assembly. This helps to prevent collapse of one or more panels during assembly.

The interior space formed when the collapsible air cargo container 1 is assembled may comprise interior mounting points.

The interior mounting points enable interior panels to be mounted within the interior space. In this way, the interior space may be sub-divided into a plurality of separate stalls. For example, the interior space may be sub-divided into three separate stalls, enabling the air cargo crate to simultaneously house three animals such as three horses. The interior panel that form the stalls are detachable, and may be laid within the collapsible air cargo container, as it is collapsed, for storage.

Alternative numbers of stalls are also possible, dependent at least in part on the interior space of the collapsible container and the size of the animal to be transported.

In some embodiments it may be desirable to select the number of stalls provided to limit the degree of movement of the animal within the stall. This may be desirable to reduce the risk of the animal being injured in the event that the animal loses balance due to manoeuvring of the aircraft in which it is being transported. The interior panels may be mounted vertically, and may be parallel to sides 40, 60. In this way, a horse is able to walk directly into a stall of the interior space when the first ramp and/or the second ramp is deployed, by releasing the ramp from its adjacent frame, and lowering the ramp such that it rests on the ground surrounding the assembled air cargo container.

Side panels 40, 60 may incorporate at least one access door (not shown). The at least one access door may enable a person, for example, a groom or veterinary surgeon travelling with a horse, to have access to the horse within the collapsible air cargo crate when the horse and crate are loaded on an aircraft.

Specific features of the air cargo container are now discussed in more detail.

The side panels 40, 60, contour panel 50 and / or roof panel 70 may have a mass that is substantially equal to, or greater than a mass that may be safely supported by a user or plurality of users during that assembly and disassembly of the air cargo container.

In some examples, panels 40, 50, 60, 70 may therefore comprise lifting means such as lifting eyes or attachment points for lifting eyes (not shown). These lifting means may permit a crane or hoist to be used during the assembly and / or collapsing of the collapsible air cargo container.

However, access to a crane or hoist may not be available when a user or team of users wishes to assemble or dissemble the animal crate, prompting a user or team of users to attempt assembly or collapsing of the container without this assistance. This may result in injury.

In some examples side panels 40, 60, contour panel 50 and / or roof panel 70 may comprise a plurality of sub-portions, each sub-portion being independently deployable / or stowable during the respective assembly or collapsing of the collapsible air cargo container.

The panels 40, 50, 60 and /or roof panel 70 may comprise at least a first sub-portion, and a second sub-portion.

In other words: -
- The first portion 41 of first panel 40 may comprise a first sub-portion 41a, and a second sub-portion 41b.
- The first portion 61 of second panel 60 may comprise a first sub-portion 61a, and a second sub-portion 61b.
- Contour panel 50 may comprise a first sub-portion 50a and a second sub-portion 50b.
- Roof panel 70 may comprise a first sub-portion 70a and a second sub-portion roof panel portion 70b.

It may be appreciated that if panels that are rotatably connected are split into sub-portions, the hinge about which the panels rotate may also be split into sub-portions.

For example, if first portion 61 and roof panel 70 are split into sub-portions, fourth side hinge 64 may also be split into sub-portions 64a and 64b.

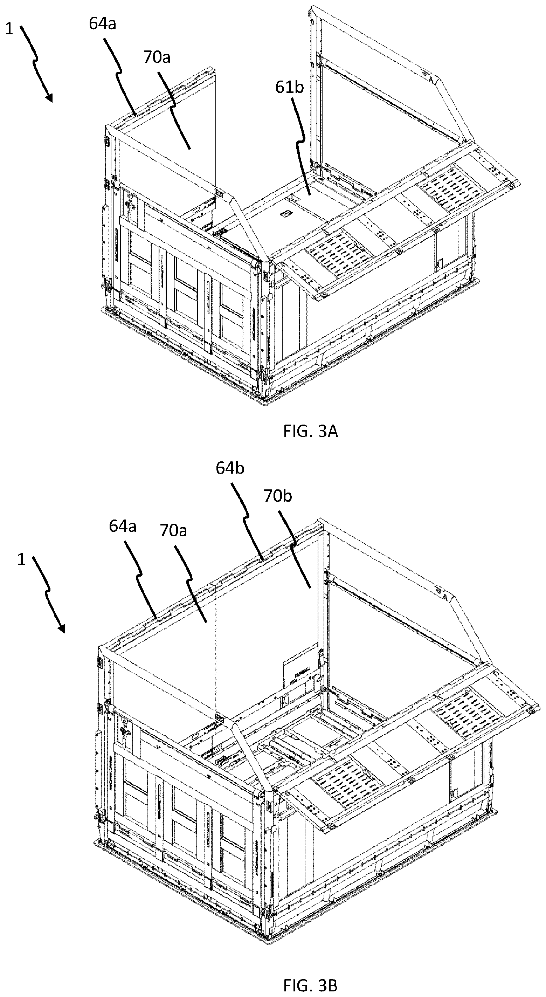

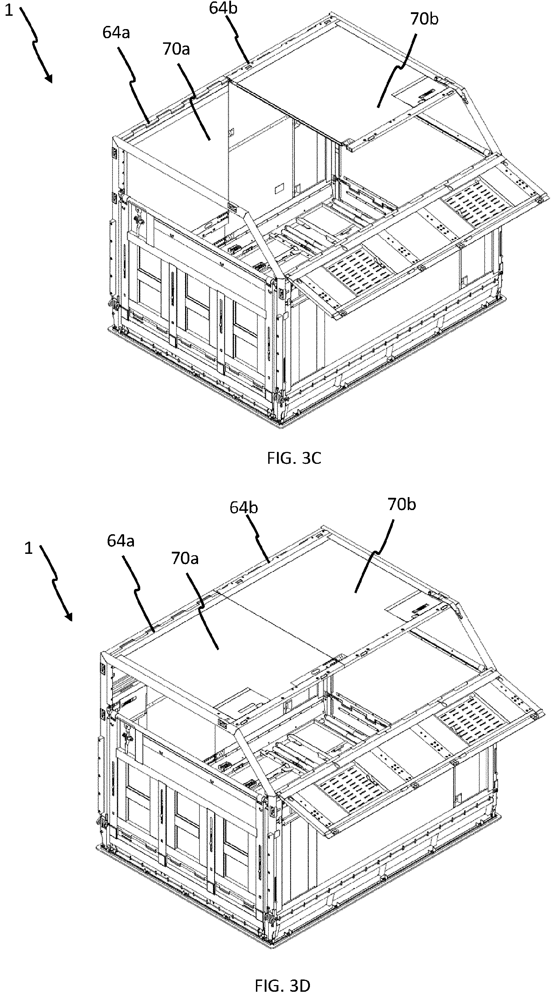

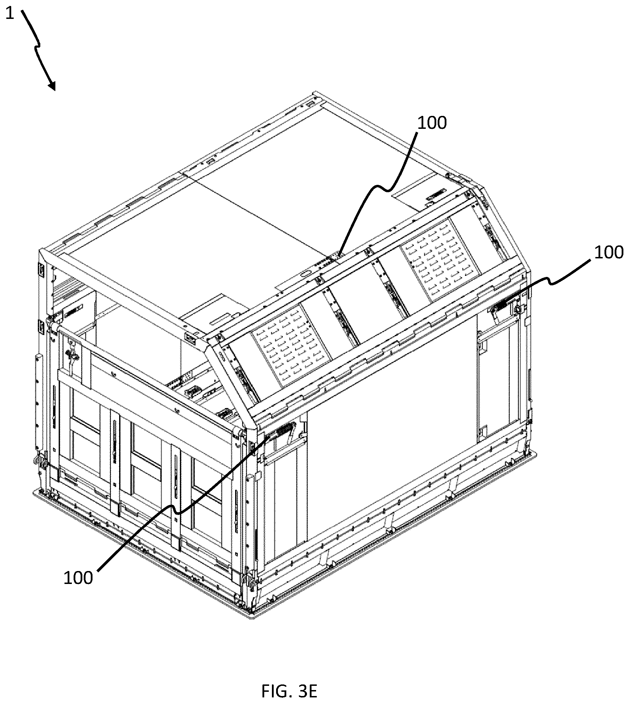

FIGS 3A - 3E illustrate an example of the use of sub-portions. In the example of FIGS 3A -3E, the first portion 61 of second panel 60 comprises sub-portions 61a, 61b, and roof panel 70 comprise sub-portions 70a, 70b, but the first portion 41 of first panel 40 and contour panel 50 do not comprise sub-portions.

It may be appreciated that other variations in use of sub-portions are also possible, without departing from the scope of the invention.

The first sub-portion of each panel may be substantially the same size as the second sub-portion of each panel. Consequently, the mass of the first sub-portion of a panel may be substantially the same as the mass of the corresponding second sub-portion of the panel. Alternatively, the size and mass of the first sub-portion of a panel may be different to the size and mass of the second sub-portion of the panel.

In the example of FIGS 3A - 3E, the sub-portions 61a, 61b, of the first portion 61 of panel 60 are substantially the same size and the sub-portions 70a, 70b of roof panel 70 are substantially the same size.

At least one locking arrangement 100 may be provided to connect the first sub-portion of a panel to a second sub-portion of a panel.

When the first sub-portion of a panel is connected to a second sub-portion of a panel, the first and second sub-portions may act as a single panel. That is, the panel sub-portions may move together and / or may transmit force from one panel sub-portion to another.

When the collapsible air cargo container is assembled, the first sub-portions may be connected to their respective second sub-portions. This increases the rigidity of the assembled air cargo container because the panel sub-portions may transmit force from one panel sub-potion to another.

During assembly and / or collapsing of the collapsible air cargo container, the first sub-portion of each panel may be rotated independently of the second sub-portion of each panel. In this way, the maximum mass of any one component that is translated or rotated during the assembly and/or disassembly of the air-cargo container is reduced relative to embodiments in which the side panels and / or roof panels do not comprise a plurality of sub-portions.

By splitting panels into at least two panel sub-portions, it may therefore no longer be necessary to use lifting equipment such as a hoist or crane to support the panels during assembly or disassembly.

It may also be appreciated, that to lock panels in their assembled position by locking arrangement 100 during assembly of the collapsible air cargo container, the panels must be held in their respective assembled orientations.

In some examples, at least one of panels 40, 50, 60, 70 may additionally comprise at least one locator latch bolt, configured to locate the panel to which it is attached in position while the locking arrangement 100 is locked and/or unlocked.

In these examples, an end of the at least one locator latch bolt is extendible beyond an edge of the panel, being configured to engage with a locator plate on an adjacent edge of an end frame. The at least one locator latch bolt is therefore configured to locate a panel (such as a first side panel, second side panel, roof panel, or if present, an inclined side panel) relative to an adjacent end frame (for example, the first end frame and/or the second end frame) while a locking arrangement that locks the panel to the end frame is locked or unlocked.

The at least one locator latch bolt, if present, therefore mitigates against the unintentional partial collapse of the collapsible air cargo container during the assembly or collapsing of the collapsible air cargo container. This is because the at least one locator latch bolt is configured to support the mass of the panel when static loading is applied to the panel. This enables a user who is assembling or collapsing the collapsible air cargo container to lock or unlock the locking arrangement 100 that couples the panel to an adjacent end frame without the panel, portion of the panel or sub-portion of the panel moving relative to the adjacent end frame.

The locator plate may be integral with the end frame or mounted on the end frame.

In some examples, the locator latch bolt may be spring-loaded. An end of the location latch bolt and / or surface of the locator plate may be profiled such that when the locator latch bolt contacts the locator plate, the locator latch bolt slides over the surface of the locator plate, at least partially retracting into or towards the edge of the panel.

In these examples, when the edge of the panel and the adjacent edge of the end frame are aligned, the locator latch bolt is aligned with a cavity in the end frame. This permits the locator latch bolt to extend away from the edge of the panel, into the cavity of the adjacent end frame. When the locator latch bolt is within the cavity, rotational movement of the panel relative to the end frame is prevented.

Thus, the spring-loaded latch acts as a location feature, holding the panel comprising the latch in position. This aids assembly of the collapsible air cargo container because the panel is automatically held in position whilst a user locks or unlocks the at least one locking arrangement that secures the panel to the end frame.

The spring-loaded latch may additionally comprise a manual release, configured to retract the spring-loaded latch from the cavity formed in the end frame.

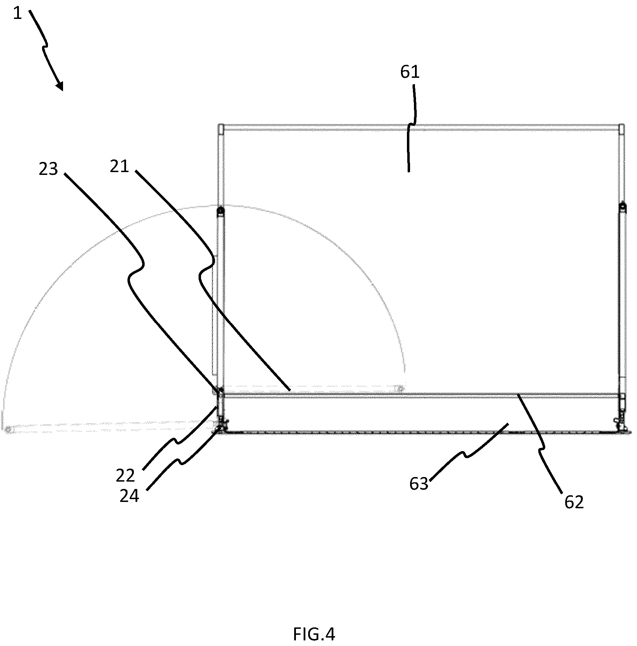

FIG. 4 illustrates a side view of the collapsible air cargo container once assembled. It illustrates various configurations of ramp 20.

To provide structural rigidity to the air cargo container, the panels of the air cargo container have a non-negligible thickness. For example, the side panels 40, 60, contour panel 50 and roof panel 70 may have a thickness in a range of 0.02 - 0.10m.

When the panels of the air cargo container are stowed, the height of the collapsed air cargo container may be in range of 0.2 - 0.5m. As frames 10, 30 and first ramp 20 and second ramp 40 are the first components to be deployed, when assembling the collapsible air cargo container, these items are also the final components to be stowed when collapsing the container.

To enable ramp 20, 35 to be stowed, ramp 20, 35 may lie collapsible air on top of components (for example, side panels, roof panel) that previously been stowed.

First ramp 20 therefore comprises a first first ramp portion 21 that is rotatably connected by first first ramp hinges 23 to a second ramp portion 22. Similarly, second ramp 35 comprises a first second ramp portion 36 that is rotatably connected by first second ramp hinges 38 to second second ramp portion 37.

The height of the first ramp hinges 23, 38 above the floor 15 may be in the range of 0.2 - 0.48m. This is because the first first ramp hinge 23 of the first ramp 20, and the first second ramp hinge 38 of the second ramp 40 are located such that when the first ramp 20 and second ramp 35 are stowed, the first ramp portion 21, 36 can lie on top of other components of the collapsible air cargo container that have already been stowed, such as side panels 40,60, contour panel 50 and roof panel 70.

As the portions of the first ramp 20 may be coplanar with the first end frame 10, the rotational axis of first first ramp hinges 23 is co-axial with the first end frame hinge 12.

As the portions of the second ramp 35 may be coplanar with the second end frame 30, the rotational axis of the first second ramp hinges 38 is co-axial with the second end frame hinge 32.

Once the air cargo container is assembled, although it would be possible to deploy the first ramp 20 and / or second ramp 35 to permit ingress into and / or egress from the air cargo container by rotating the first ramp portion 21, 36 about the first ramp hinges 23, 38 such that an edge of the first ramp portion opposite the first ramp hinge rests on the ground adjacent to the assembled air cargo container, the resulting deployed ramp would be steep, and would create a step into the stall area of the container.

This may be undesirable as it could make the loading and/or unloading of an animal such as a horse more hazardous. This is because the step may increase the risk of injury to the animal as it steps down from the ramp into the stable area of the container or step up from the stable area onto the ramp.

For this reason, the first ramp 20 additionally comprises a second first ramp portion 22 and a second first ramp hinge 24. The second first ramp hinge 24 rotatably connects the second first ramp portion 22 of the first ramp 20 to the floor 15 proximal to an external perimeter of the floor 15.

When opening the first ramp 20 of the assembled air cargo container, it would be possible to lower the ramp 20, such that rotation about both the first and second ramp hinges 23, 24 occurs. This would result in an improved ramp, because the ramp would have no significant downward step into the stall area.

However, lowering the ramp 20 could prove difficult for a user because it could be difficult to prevent rotation of the first first ramp portion 21 relative to the second first ramp portion 22 about the first ramp hinge, whilst rotation is also occurring about the second ramp hinge.

During opening of the ramp, the first and second first ramp portions 21, 22 could drop to the ground, potentially injuring the user(s) opening the ramp as this occurred.

It may also be appreciated that when a horse is transported in the collapsible air cargo container, it is important that the horse can be safely contained within the container. This may include ensuring that the horsebox structure can withstand loading requirements set for certification of the air cargo container for use on board an aircraft. Potential rotation of the first ramp portion relative to the second ramp portion about the first ramp hinges 23 may reduce the rigidity of the assembled air cargo container.

The ramp 20 may therefore additionally comprise at least one anti-rotation feature. The anti-rotation feature may have a locked state and an unlocked state. When locked, the anti-rotation feature prevents rotation of the second ramp portion relative to the first ramp portion; when unlocked the anti rotation feature permits rotation of the second ramp portion relative to the first ramp portion.

Thus, when the collapsible horse crate is to collapsed, the anti-rotation feature is unlocked, to enable rotation of the first ramp portion relative to the second ramp portion. The anti-rotation feature may be locked at all other times - for example, when the ramp is to be lowered for ingress to or egress from the container, and when the container contains at least one horse.

The anti-rotation feature can take several forms. For example, the anti-rotation feature may comprise a latch bolt and a female receptacle for the latch bolt. In some embodiments, the latch bolt may be integrated within a structure. For example, the latch bolt may be integrated within a first ramp portion or a second ramp portion, while the female receptacle for the latch bolt may be integrated within the other of the first ramp portion and the second ramp portion. In these embodiments, the structure may form a barrel or receiver for the latch bolt. This may provide several advantages, in that the structure is multifunctional, resulting in a weight reduction, whilst the protrusion of the latch bolt above the surface of the surrounding structure is reduced relative to attaching the latch bolt to a surface of the structure. The cross-sectional area of the latch bolt may therefore be increased relative to that of a latch bolt attached to the surface of the ramp. Increasing the cross-sectional area may increase the ability of the latch bolt to accommodate bending moments, thus also increasing the strength of the anti-rotation feature. Alternatively, or additionally, a lower profile may also be achieved for the same strength of anti-rotation feature. This may be advantageous, because the lower-profile latch bolt effectively reduces the thickness of the structure to which it is integrated. This may be beneficial for folding the structure, as the total height of the air-cargo container when collapsed may be reduced, permitting space-efficient storage of the collapsed air cargo container without a reduction in the rigidity of the air cargo container when assembled.

The latch bolt may be slidably connected to the first portion of the ramp, and the female receptacle may be connected to the second portion of the ramp.

Alternatively, the latch bolt may be slidably connected to the second portion of the ramp, and the female receptacle may be connected to the first portion of the ramp.

To lock the anti-rotation feature, the latch bolt slides to engage with the female receptacle. Rotation of the first hinge portion to the second portion is thus prevented.

To unlock the anti-rotation feature, the latch bolt is not engaged with the female receptable. Rotation of the first hinge portion relative to the second hinge portion is then permitted.

It may be desirable to maintain the at least one anti-rotation feature in its locked and/or unlocked configuration without ongoing user input. In some examples, the anti-rotation feature may therefore additionally comprise at least one detent configured to hold the hold the anti-rotation feature in its locked configuration, and / or at least one detent configured to hold the anti-rotation means in its unlocked configuration.

For example, in the case of a latch bolt, the detent may comprise a hole in a slidable portion of the latch bolt, and a second hole in a latch barrel, through which the bolt slides, where the first and second holes align when the latch bolt is in its locked configuration. A pin or padlock may then be placed within the aligned first and second holes to prevent unlocking.

As previously disclosed, the at least one locking arrangement locks (secures) adjacent components of the collapsible air cargo container to each other.

Securing adjacent components protects an animal within the container by preventing collapse of the container onto the animal whilst it is inside the container. The securing force used to lock adjacent components accounts for mechanical loads acting on the container that may be experienced during flight. The mechanical loads experienced during flight are higher than mechanical loads when the container is stationary, and may relate to both normal flight conditions, and abnormal flight conditions, such as an emergency. The ability for the air cargo container to meet pre-defined mechanical load requirements may be a requirement for the air cargo container to be certified for use on board an aircraft.

Examples of an emergency associated with abnormal flight conditions include encountering air turbulence or taking emergency avoiding action to prevent collision with another aircraft or obstacle.

These emergencies can significantly increase the mechanical load acting on the air cargo container due to the acceleration and / or deceleration in at least one of three dimensions that may be experienced. In addition, the mechanical loads may further increase if, manoeuvring of the aircraft causes an animal within the air cargo container to fall against a component of the container such as a sidewall or ramp.

The at least one locking arrangement may also lock (secure) adjacent components of the air cargo container to each other under vibration conditions that may be experienced during flight.

The vibration may for example, be caused by a bird strike event to at least one of the engines of the aircraft.

The vibration may be caused by ice shedding from the fan blades of at least one of the engines.

The frequency of vibration may be based at least in part on a rotational speed of the at least one engine - for example, on a rotational speed of the fan of the at least one engine. The vibration may be transmitted from the at least one engine to the fuselage in which the container is housed.

It may also be desirable that the collapsible air cargo container can be assembled and/or collapsed without the use of specialist tools. Ideally, no additional tools may be needed.

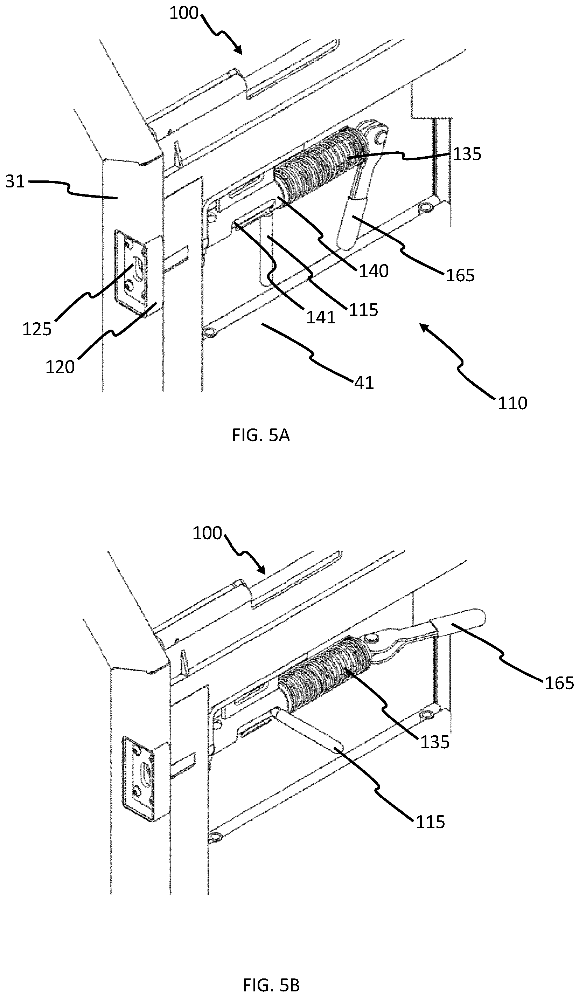

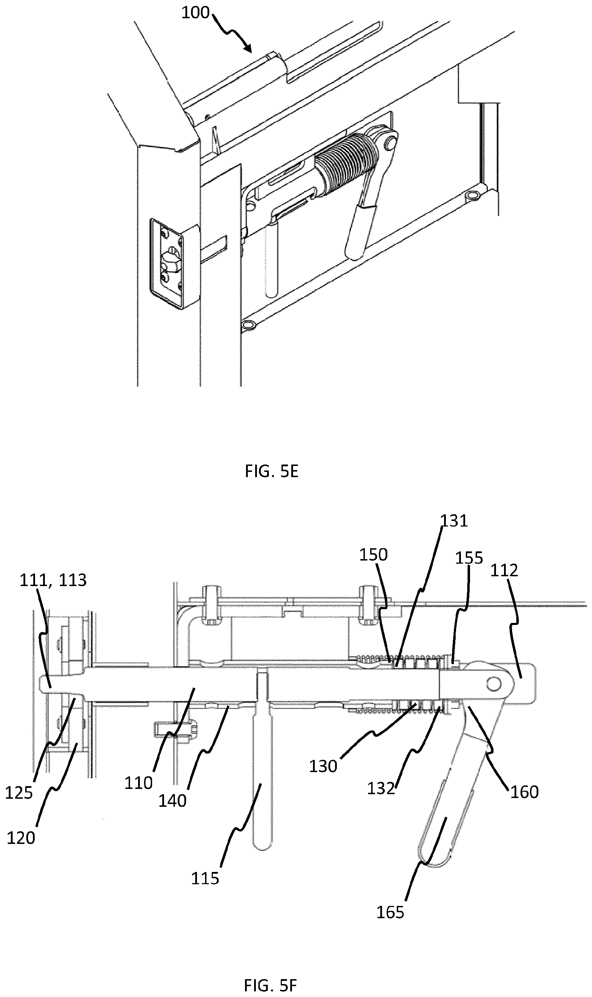

FIGS. 5A - 5F illustrate a first example of the locking arrangement 100.

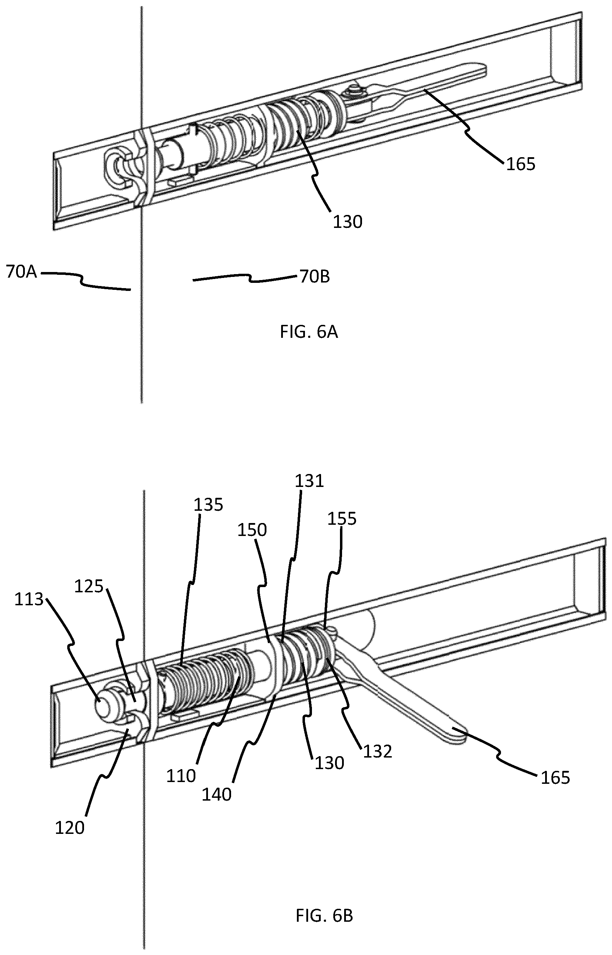

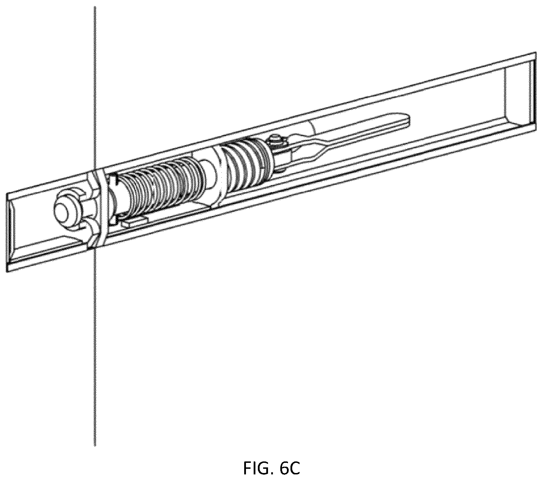

FIGS 6A - 6C illustrate a second example of the locking arrangement 100.

The locking arrangement 100 is configured to enable adjacent components of the collapsible air cargo container to be locked (secured) together. For example, the locking arrangement may be configured to lock the first portion 21 of the first ramp 20 to the first portion 11 of the first end frame 10; to lock the first portion 41 of the second ramp 40 to the first portion 31 of the second end frame 30; to lock sidewalls 40, 60, contour panel 50 and / or roof panel 70 to the first end frame or second end frame etc.

The locking arrangement 100 may be self-adjusting. In this context, self-adjusting means that the locking arrangement may accommodate manufacturing tolerances and/or wear between components, whilst still producing a mechanically secure connection between the adjacent components.

As illustrated in FIGS 5A - 5E, and particularly, in the cross-section of FIG 5F, parts of the locking arrangement 100 are distributed between the components to be locked together, with for example, a male feature, such as a bolt arrangement 110 mounted to one component, and a female feature, such as a locking plate 120, mounted to the other component.

As is subsequently explained, the example locking arrangement 100 of FIGS 5A - 5F comprises a barrel which may slide between two positions, the barrel being rotatable between two orientations. The locking arrangement additionally comprises an extension 165 which may actuate a cam 160, the extension also having two orientations.

The orientation of the cam, orientation of the bolt within the barrel and position of the bolt within the barrel may each be varied. The locking arrangement therefore comprises 8 configurations (2³). Five of these configurations are shown in FIGS 5A - 5E, these FIGS being provided to aid understanding of the locking arrangement 100.

As an example, FIGS 5A - 5F illustrate how the locking arrangement 100 may lock the first portion 41 of the first side panel 40 to the first portion 31 of the second end frame 30.

In this example, the bolt arrangement 110 is attached to the first portion 41 of the first side panel 40, and the locking plate 120 may be attached to the first portion of the second end frame 31. It may be appreciated that in other embodiments, the bolt arrangement 100 may be attached to the first portion of the second end frame and the locking plate may be attached to the first side panel.

As an example, FIGS 6A - 6C illustrate how the locking arrangement 100 may lock sub-portions of a panel together - for example sub-portions 70a and 70b of roof panel 70.

In all examples, the locking arrangement 100 comprises a locking plate 120, and a slidable bolt 110 for engaging and disengaging the locking plate 120. The locking plate 120 comprises a locking plate slot 125, permitting the slidable bolt 110 to engage the locking plate 120.

In some examples, the locking plate slot 125 may be closed, that is the locking plate slot 120 has a perimeter that is entirely within the locking plate 120. In these embodiments, the slidable bolt 110 may slide through the locking plate slot, for engaging the locking plate 120.

In some examples, the locking plate slot 125 may be open, that is, the locking plate slot extends from the perimeter of the locking plate 120 towards a centre of the locking plate 120.

In these embodiments, the slidable bolt 110 may slide through the locking plate slot 120 or may slide from the side of the locking plate 120 at the location at which the locking plate slot extends from the perimeter of the locking plate, for engaging the locking plate.

In the example of FIGS 6A - 6C, the slidable bolt 110 may slide from the side of the locking plate 120 at the location at which the locking plate slot 125 extends from the perimeter of the locking plate 120, for engaging the locking plate.

In some examples, the locking plate 120 may be planar.

A means for preventing disengagement of the bolt from the locking plate is also provided. The means for preventing disengagement of the bolt from the locking plate comprises a geometrical arrangement of a portion of the slidable bolt and the locking plate slot, such that when the portion of the bolt is engaged with the locking plate, withdrawal of the bolt through the locking plate is prevented.

In some examples, a surface of the locking plate 120 may be comprise a concave portion. The concave portion may be configured to engage with a portion of the slidable bolt. The engagement of a portion of the slidable bolt with the concave portion of the locking plate may further prevent disengagement of the slidable bolt 110 from the locking plate 120, for example, when the locking arrangement is exposed to vibration.

The locking arrangement additionally comprises a bias 130.

The bias 130 is switchable between a first state and a second state while the slidable bolt 110 is engaging the locking plate 120.

In the first state, the bias 130 is configured to resist manual disengagement of the slidable bolt 110 from the locking plate 120.

In the second state, the bias 130 is configured to enable manual disengagement of the slidable bolt 110 from the locking plate 120.

In some examples, for example, the examples of FIGS 5A - 5F, the bolt 110 is slidable within a barrel 140, that is coaxial with the bolt 110.

In some examples, the bolt 110 may be rotatable within the barrel that is coaxial with the bolt 110. For example, in embodiments in which the locking plate slot 125 is closed, the bolt 110 is slidable and rotatable within the barrel 140; in embodiments in which the locking plate slot is open 125, the bolt 110 may be slidable within the barrel 140, or may be slidable and rotatable within the barrel 140.

The bolt 110 comprises a first end 111, and a second end 112 that is opposite the first end 112. The first end 111 and/or second end 112 of the bolt 120 may protrude from the barrel 140, within which the bolt 110 is slidable.

In some but not necessarily all embodiments, the barrel 140 may comprise a cut-out 141. The cut-out 141 may comprise an axial portion 142, a first part-circumferential portion 143 that is connected to the axial portion 142 at a first end of the axial portion, and a second part-circumferential portion 144 that is connected to the axial portion 142 at a second end of the axial portion 142.

In these embodiments, the slidable bolt 110 may additionally comprise a bolt handle 115 that extends substantially perpendicularly from the bolt. In these embodiments, the bolt handle 115 is constrained to move within the cut-out 141 of the barrel 140 as the bolt slides and/or rotates with the barrel. In these embodiments, axial sliding of the bolt may be permitted between the first end of the axial portion and second end of the axial portion of the cut-out, while rotation of the bolt is only permitted when the bolt handle is at either the first end or second end of the axial portion of the cut-out.

The first and second part-circumferential portions may extend over a circumferential arc of up to 90°. When the handle of the bolt is within either the first or second part-circumferential portion of the cut-out, the barrel may be rotated by up to 90°. When the bolt is rotated such that the bolt handle is within either of the first or second circumferential portion, but is not within the axial portion, the bolt may no longer slide over the full range of the axial cut-out. In these embodiments, the first and second part-circumferential portions are detents, constraining axial movement (sliding) of the bolt within the barrel.

The first end 111 of the bolt 110 comprises at least one protrusion 113, the at least one protrusion extending at least in part, perpendicularly from the shaft of the bolt 110, slidable within the barrel 140.

The at least one protrusion 113 may comprise a plurality of protrusions. For example, in FIGS 5A - 5F, the at least one protrusion comprises two protrusions, on opposite sides of the bolt shaft. This arrangement of protrusions may be called a "hammerhead".

Other variants of the at least one protrusion, comprising alternative numbers of protrusions are also envisaged.

In embodiments in which the locking plate slot 125 is open, the protrusion 113 may be domed, having a cross-section that is rotationally symmetric about a principal axis of the bolt. This is as illustrated in the examples of FIGS 6A - 6C.

In some examples, the locking plate may comprise a concave portion that surrounds or partially surrounds the locking plate slot 120. The concave portion of the locking plate is configured to engage with the at least one protrusion. The engagement between the concave portion of the locking plate slot and protrusion locates (centers) the protrusion within the locking plate slot. This aids alignment of the bolt relative to the locking plate and promotes the continued engagement of the protrusion and locking plate slot, under mechanical load, for example, such as vibration.

Embodiments in which the bolt does not comprise at least one protrusion, but comprises at least one groove are also envisaged.

For example, in some embodiments, the groove may be L-shaped. In these embodiments, a first channel of the at least one groove extends axially from the first end of the bolt towards the second end of the bolt. A second channel may extend substantially perpendicularly from the end of the first channel in a circumferential arc. The circumferential arc may extend up to 90°. The circumferential arc may be greater than or equal to the first and second circumferential arc portions cut out of the barrel.

In embodiments in which the locking plate comprises a groove, the locking plate slot additionally comprises at least one locking plate slot protrusion that may be aligned with the first channel of the at least one L-shaped groove as the bolt is slid through the locking plate. The locking plate slot protrusion may slide along the first channel of the L-shaped groove to the intersection of the first channel of the at least one L-shaped groove and the second channel of the at least one L-shaped groove. Rotation of the bolt within the barrel transitions the at least one locking plate protrusion from the first channel of he at least one L-shaped groove to the second channel of the at least one L-shaped groove. When the at least one locking plate protrusion is within the second channel of the L-shaped groove, axial sliding of the bolt is prevented. Thus, the bolt cannot be withdrawn from the locking plate without rotating the bolt within the barrel.

Other groove configurations are also possible. For example, in embodiments in which the locking plate slot is open, at least one tangential groove may be provided in the bolt. The at least one tangential groove may be aligned with an edge of the slot of the locking plate, permitting the bolt to be inserted into the locking plate from the side. Once the tangential groove of the bolt is aligned with an edge of the slot of the locking plate, sliding of bolt within the barrel is constrained.

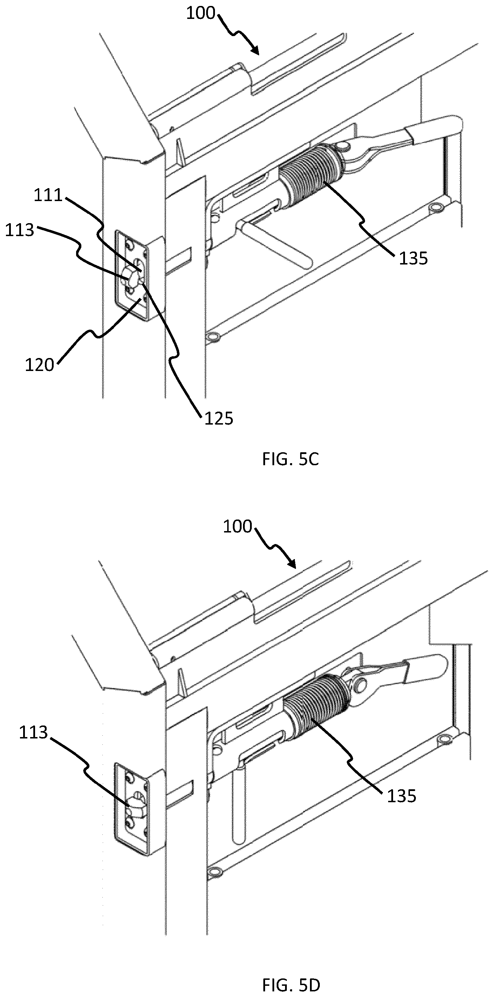

In some examples, the shape of the at least one protrusion 113 is such that when the bolt 110 is in a first orientation, the first end of the bolt comprising the at least one protrusion may slide through the locking plate, as illustrated in FIG 5C. After the at least one protrusion 113 slides through the locking plate, the bolt may be rotated to a second orientation, as illustrated in FIG 5D. For example, the bolt may be rotated through 90°. In the second orientation, the bolt 110 may not be withdrawn through the locking plate 120. This is because in these examples, the at least one protrusion 113 is not axi-symmetric about the bolt axis. Rotation of the bolt from the first orientation to the second orientation therefore prevents disengagement of the bolt 110 from the locking plate 120.

As it is possible for a user to rotate the first end of the bolt relative to the locking plate, once the at least one protrusion has passed through the locking plate 120, it may be appreciated that the first and second component (for example a side panel and the end frame of FIGS 5A - 5F) may not be sufficiently fastened to accommodate all possible mechanical loads that may be experienced during flight. The repeated locking and unlocking of the locking arrangement, may also cause wear on the surface of the at least one protrusion 113 and / or locking plate 120.

Wear on the surface of the at least one protrusion 113 and/or locking plate 120 at the interface between the two may make it progressively easier to disengage the bolt 110 from the locking plate 120. This may reduce the mechanical load that the air cargo container 1 can be subjected to, before disengagement of the locking arrangement 100 occurs.

The locking arrangement 100 therefore additionally comprises a bias 130. The bias is switchable between a first state and a second state, while the bolt 110 is engaged in the locking plate 120.

In the first state, the bias 130 is configured to resist manual disengagement of the bolt form the locking plate.

In the second state, the bias 130 is configured to enable manual disengagement of the bolt from the locking plate.

The bias may be a spring. The bias may be a helical spring. The bias may be an elastomeric block.

In the first example of the locking arrangement, switching of the bias 130 is illustrated by FIGS 5D - 5F. In the second example of the locking arrangement, switching of the bias is illustrated by FIGS 6B - 6C.

A first end 131 of the bias 130 is located against a fixed reaction surface 150. The fixed reaction surface 150 may for example comprise a mounting feature on the barrel 140 of the locking arrangement 110, such as an end of the barrel, or may comprise a mounting feature that is connected to the same component of the collapsible container as the barrel of the locking arrangement. The fixed reaction surface 150 reacts against the first end 131 of the bias 130, preventing movement of the bias 130 towards the locking plate 120.

The bias 130 may have an axis that is co-axial with the slidable bolt. In some embodiments, a portion of the slidable bolt 110 may be slidable through the bias 130.

In some but not necessarily all embodiments, a movable reaction surface155 may be provided at a second end 132 of the bias 130, wherein the second end 132 of the bias 130 is opposite the first end 131 of the bias 130. The movable reaction surface 155 may comprise a throughhole, through which the bolt 110 is slidable. The movable reaction surface 155 may be a ring such as a washer. The second end 112 of the bolt 110 may protrude through the bias 130 and movable reaction surface 155.

A cam 160 may be rotatably connected to the bolt 110 about a cam axis that is proximal to the second end 112 of the bolt 110. The cam 160 may act on the second end 132 of the bias 130. The cam 160 may act directly on the bias, or may act on the movable reaction surface 155 or on barrel 150 , which in turn acts on the bias 130. Rotation of the cam 160 may move the second end 132 of the bias 130 relative to the second end 112 of the bolt 110. The cam 160 may be an overcenter cam. In embodiments in which the cam is an overcenter cam, the maximum movement of the second end 132 of the bias 130 relative to the second end 112 of the bolt 110, occurs at an intermediate angle of rotation of the cam. Thus, the overcenter cam provides a self-locking feature for the locking arrangement 100.

In configurations in which the first end 111 of the bolt 110 is not constrained by the locking plate (not engaging the locking plate), movement of the second end 132 of the bias 130 relative to the second end 112 of the bolt 110 slides the bolt 110 away from the locking plate 120.

In configurations in which the first end 111 of the bolt 110 is constrained by (engaging) the locking plate 120, movement of the second end 132 of the bias 130 relative to the second end 112 of the bolt 110 changes a length of the bias 130. This is because the location of the first end of the bias is constrained by the fixed reaction surface 150, while the location of the second end 112 of bolt 110 is constrained by the engagement between the locking plate 120 and the first end 111 of the bolt 110.

Changing the length of the bias 130 change a degree of compression of the bias 130.

Changing the degree of compression of the bias changes the contact force between the first end of the bias and the fixed reaction surface, and changes the contact force between the second end of the bias and the cam or movable reaction surface, if present.

In configurations of the locking arrangement in which the bolt is constrained from sliding axially by the locking plate, changing the degree of compression of the bias also changes the contact force between the bolt and the locking plate. As the bolt is constrained from sliding, the sum of all forces acting on the bolt when the bolt is constrained from sliding is zero. When the sum of all forces is zero, the forces acting on the locking arrangement are in equilibrium.

The magnitude of the compression of the bias may determine the ease of manual disengagement of the bolt from the locking plate.

If the magnitude of the compression of the bias is high, a user may be unable to move the bolt relative to the mounting plate. Thus, in this first state, the bias is configured to resist manual disengagement of the bolt from the locking plate. Resisting manual disengagement of the bolt from the locking plate may be desirable because the magnitude of the contact force between the bolt and the locking plate may secure the components to which the locking plate and the bolt are attached (for example, the first end frame and the first side panel respectively) such that each is held securely relative to the other. This ensures that the components do not disengage once the air cargo container is assembled, when the air cargo container is exposed to mechanical loads during flight.

It may be appreciated that wear may occur in the locking mechanism, due to the repeated locking and unlocking of the mechanism. An advantage of the bias is that by suitable selection of tolerancing of the arrangement and spring constant of the bias, the locking arrangement automatically compensates for wear in the locking arrangement, such that components do not disengage once the air cargo container is assembled,

If the magnitude of compression of the bias is low (in the second state), a user may move or rotate the bolt relative to the locking plate. This enables manual disengagement and / or engagement of the bolt from the locking plate without requiring additional tools. This eases assembly and / or disassembly of the collapsible air cargo container.

Thus, when the cam is in a first orientation, the bias is in the first equilibrium state, the bias configured to resist manual disengagement of the bolt from the locking plate; when the cam is in a second orientation, the bias is in the second equilibrium state, the bias configured to enable manual disengagement of the bolt from the locking plate. In embodiments in which the cam is an overcenter cam, the intermediate angle of rotation at which the maximum movement of the second end 132 of the bias 130 relative to the second end 112 of the bolt 110 occurs, corresponds to an intermediate cam orientation that is between the first orientation and the second orientation. Thus, the cam is prevented from changing state between the first orientation and the second orientation, without user input.

Rotation of the cam from the first orientation to the second orientation changes the compression of the bias, switching the bias from the first equilibrium state to the second equilibrium state. Similarly, rotation of the cam from the second orientation to the first orientation changes the compression of the bias from the second equilibrium state to the first equilibrium state.

Rotation of the cam between states therefore permits both assembly and /or disassembly of the collapsible air cargo container, whilst also securing the locking arrangement such that the air cargo container may withstand mechanical loads experienced during flight.

The spring constant of the bias may be in the range 1500 - 2500 Newtons / meter.

An extension, such as a handle 165, may be attached to the cam 160. The extension enables a user to actuate the cam 160 between the first and second orientations. In these embodiments, no additional tooling may be required for assembly and / or disassembly of the collapsible air cargo container.

In other embodiments, a fixing, such as a bolt head or socket may be provided on the cam, such that a user can actuate the cam using a separate tool. This may be advantageous if the space surrounding the locking arrangement is such that there is insufficient room to accommodate the extension when the bias is in either the first equilibrium state or the second equilibrium state, or if it desirable that only authorised personnel should assemble and / or disassemble the air cargo container. In these embodiments, the fixing provided on the cam may have a pattern such that a special tool that is unique to the air cargo container is required to actuate the cam.

The locking arrangement may additionally comprise a second bias 135. The second bias 135 may have a lower spring constant than the first bias 135. The spring constant of the second bias 135 may be in the range of 30 - 40 Newtons/ meter.

The first end of the second bias may be constrained by the fixed reaction surface, or a second fixed reaction surface. The second end of the second bias may be constrained by the movable reaction surface. The second bias may be in a state of compression when the bolt is engaged with the locking plate. When the bolt is disengaged from the locking plate, the second bias acts to withdraw the bolt away from the locking plate. This may be advantageous as the first end of the bolt may be prevented from extending beyond an edge of a ramp, side panel or roof panel when the panel is stowed. This may prevent damage to the bolt during stowage,

There are present different sets of numbered paragraphs A1.1, A1.2; A2.1, A2.2; B1.1, B1.2; B2.1, B2.2; C, .... The first paragraph in any of these sets of paragraphs could form the basis for an independent claim. Features present in one set of paragraphs can be combined with features present in other sets of paragraphs.

A1.1. A collapsible air cargo container locking arrangement 100, the locking arrangement comprising: a locking plate; a slidable bolt for engaging and disengaging the locking plate; means for preventing disengaging of the bolt from the locking plate; a bias, switchable between a first state and a second state while the bolt is engaging the locking plate, wherein in the first state the bias is configured to resist manual disengagement of the bolt from the locking plate; and wherein in the second state the bias is configured to enable manual disengagement of the bolt from the locking plate.

A1.2. A locking arrangement as described in paragraph A1.1 wherein the bias is changeable between the first equilibrium state and the second equilibrium state by a cam, acting on an end the bias.

A1.3. A locking arrangement as described in paragraph A1.2, wherein the cam is rotatably connected to the bolt, wherein rotation of the cam from a first orientation to a second orientation changes a compression of the bias.

A1.4. A locking arrangement as described in paragraph 2 or paragraph 3, wherein: the bias is in the first equilibrium state when the cam is in the first orientation, and the bias is in the second equilibrium state when the cam is in the second orientation.

A1.5. A locking arrangement as described in any previous paragraph, wherein the bias has a spring constant in a range of 1500N/m - 2500 N/m.

A1.6. A locking arrangement as described in any previous paragraph, wherein the bias comprises a helical spring.

A1.7. A locking arrangement as described in any of paragraphs 2 to 6 wherein a handle is fixedly connected to the cam.

A1.8. A locking arrangement as described in any preceding paragraph, wherein the locking arrangement comprises a second bias, configured to bias the bolt away from the locking plate.

A1.9. A locking arrangement as described in any preceding paragraph wherein the locking plate comprises a concave portion that is configured to engage with the slidable bolt.

A2.1. A collapsible air cargo container foldable ramp, the foldable ramp comprising: a first ramp portion; a second ramp portion; a first ramp hinge that rotatably connects the first ramp portion to the second ramp portion; and, a second ramp hinge that rotatably connects the second ramp portion to a floor of the collapsible air cargo container.

A2.2. A foldable ramp as described in paragraph A2.1, wherein the ramp comprises at least one anti-rotation feature, which when locked prevents rotation of the second ramp portion relative to the first ramp portion, and when unlocked permits rotation of the second ramp portion relative to the first ramp portion.

A2.3. A foldable ramp as described in paragraph A2.3, wherein the at least one anti-rotation feature is locked when the first ramp portion and the second ramp portion are aligned to form a substantially planar surface.

A2.4. A foldable ramp as described in paragraph A2.2 or A2.3, wherein the at least one anti-rotation feature is a latch bolt;
wherein the barrel of the latch bolt is integral with the first ramp portion and the receiver of the latch bolt is integral with the second ramp portion, or
wherein the barrel of the latch bolt is integral with the second ramp portion and the receiver of the latch bolt is integral with the first ramp portion.

A2.5. A collapsible air cargo container, comprising at least one foldable ramp as described in any of paragraphs A2.1 to A2.4, wherein the collapsible air cargo container is in a collapsed state or an assembled state.

A2.6. A collapsible air cargo container, as described in paragraph A2.5, the collapsible air cargo container comprising at least one locking arrangement as described in any of paragraphs A1.1 to A1.9.

A3.1. A collapsible air cargo container, wherein the collapsible air cargo container comprises: a floor; a first end frame, comprising a first portion and a second portion, wherein the first portion of the first end frame is rotatably connected to the second portion of the first end frame, and the second portion of the first end frame is fixedly connected to the floor; a second end frame comprising a first portion and a second portion, wherein the first portion of the second end frame is rotatably connected to the second portion of the second end frame, and the second portion of the second end frame is fixedly connected to the floor; a first side panel, comprising a first portion and a second portion, wherein the first portion of the first side panel is rotatably connected to the second portion of the first side panel, and the second portion of the first side panel is fixedly connected to the floor; a second side panel, comprising a first portion and a second portion, wherein the first portion of the second side panel is rotatably connected to the second portion of the second side panel, and the second portion of the second side panel is fixedly connected to the floor; and a roof panel, rotatably connected to either the first portion of the first side panel or the first portion of the second side panel, wherein at least one of the first portion of the first side panel, the first portion of the second side panel, the roof panel and / or the roof panel comprise a plurality of sub-portions, wherein the sub-portions are independently deployable during the assembly of the collapsible air cargo container, and / or are independently stowable during collapsing of the air cargo container.

A3.2. A collapsible air cargo container as described in paragraph A3.1, wherein: the plurality of sub-portions of the first side panel are locked together by the locking arrangement as described in any of paragraphs A1.1 to A1.9 to form the first side panel; and / or, wherein the plurality of sub-portions of the second side panel are locked together by the locking arrangement as described in any of paragraphs A1.1 to A1.9 to form the second side panel; and/or wherein the plurality of sub-portions of the roof panel are locked together by the locking arrangement as described in any of paragraphs A1.1 to A1.9 to form the roof panel.

A3.3. A collapsible air cargo container as described in paragraph A3.2, wherein the collapsible air cargo container comprises at least one locator latch bolt, the locator latch bolt configured to locate at least one of the first side panel, second side panel and/or roof panel relative to either the first end frame or second end frame during assembly or collapsing of the collapsible air cargo container.

A3.4. A collapsible air cargo container as described in any of paragraphs A3.1 to A3.3, wherein the collapsible air cargo container additionally comprises an inclined side panel, the inclined side panel being rotatably connected to the other of the first portion of the first side panel and the first portion of the second side panel such that the inclined side panel and roof panel are adjacent when the collapsible air cargo container is assembled.

A3.5. A collapsible air cargo container as described in paragraph A3.4, wherein the inclined side panel comprises a plurality of sub portions.

A3.6. A collapsible air cargo container as described in paragraph A3.4 or A3.5, wherein the collapsible air cargo container comprises at least one locator latch bolt, the locator latch bolt configured to locate at the inclined side panel relative to either the first end frame or second end frame during assembly or collapsing of the collapsible air cargo container.

A3.7. A collapsible air cargo container, wherein the collapsible air cargo container comprises: a floor; a first end frame, comprising a first portion and a second portion, wherein the first portion of the first end frame is rotatably connected to the second portion of the first end frame, and the second portion of the first end frame is fixedly connected to the floor; a second end frame comprising a first portion and a second portion, wherein the first portion of the second end frame is rotatably connected to the second portion of the second end frame, and the second portion of the second end frame is fixedly connected to the floor; a first side panel, comprising a first portion and a second portion, wherein the first portion of the first side panel is rotatably connected to the second portion of the first side panel, and the second portion of the first side panel is fixedly connected to the floor; a second side panel, comprising a first portion and a second portion, wherein the first portion of the second side panel is rotatably connected to the second portion of the second side panel, and the second portion of the second side panel is fixedly connected to the floor; a roof panel, rotatably connected to either the first portion of the first side panel or the first portion of the second side panel; a third side panel, comprising a first portion and a second portion, wherein the first portion of the third side panel is rotatably connected to the second portion of the third side panel, such that the third side panel and the first end frame are configured to rotate independently about a common axis; and, optionally, a fourth side panel, comprising a first portion and a second portion, wherein the first portion of the fourth side panel is rotatably connected to the second portion of the fourth side panel, such that the fourth side panel and the second end frame are configured to rotate independently about a common axis.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A collapsible air cargo container, wherein the collapsible air cargo container comprises:
a floor;
a first end frame, comprising a first portion and a second portion, wherein the first portion of the first end frame is rotatably connected to the second portion of the first end frame, and the second portion of the first end frame is fixedly connected to the floor;
a second end frame comprising a first portion and a second portion, wherein the first portion of the second end frame is rotatably connected to the second portion of the second end frame, and the second portion of the second end frame is fixedly connected to the floor;
a first side panel, comprising a first portion and a second portion, wherein the first portion of the first side panel is rotatably connected to the second portion of the first side panel, and the second portion of the first side panel is fixedly connected to the floor;
a second side panel, comprising a first portion and a second portion, wherein the first portion of the second side panel is rotatably connected to the second portion of the second side panel, and the second portion of the second side panel is fixedly connected to the floor; and
a roof panel, rotatably connected to either the first portion of the first side panel or the first portion of the second side panel, wherein at least one of the first portion of the first side panel, the first portion of the second side panel, the roof panel and / or the roof panel comprise a plurality of sub-portions, wherein the sub-portions are independently deployable during the assembly of the collapsible air cargo container, and / or are independently stowable during collapsing of the air cargo container.

2. A collapsible air cargo container as claimed in claim 1, wherein:
the plurality of sub-portions of the first side panel are locked together by a locking arrangement to form the first side panel; and / or,
wherein the plurality of sub-portions of the second side panel are locked together by a locking arrangement to form the second side panel; and/or
wherein the plurality of sub-portions of the roof panel are locked together by a locking arrangement to form the roof panel.

3. A collapsible air cargo container as claimed in claim 2, wherein the collapsible air cargo container comprises at least one locator latch bolt, the locator latch bolt configured to locate at least one of the first side panel, second side panel and/or roof panel relative to either the first end frame or second end frame during assembly or collapsing of the collapsible air cargo container.

4. A collapsible air cargo container as claimed in any of claims 1 to 3, wherein the collapsible air cargo container additionally comprises an inclined side panel, the inclined side panel being rotatably connected to the other of the first portion of the first side panel and the first portion of the second side panel such that the inclined side panel and roof panel are adjacent when the collapsible air cargo container is assembled.

5. A collapsible air cargo container as claimed in claim 4, wherein the inclined side panel comprises a plurality of sub portions.

6. A collapsible air cargo container as claimed in claim 4 or 5, wherein the collapsible air cargo container comprises at least one locator latch bolt, the locator latch bolt configured to locate at the inclined side panel relative to either the first end frame or second end frame during assembly or collapsing of the collapsible air cargo container.

7. A collapsible air cargo container, wherein the collapsible air cargo container comprises:
a floor;
a first end frame, comprising a first portion and a second portion, wherein the first portion of the first end frame is rotatably connected to the second portion of the first end frame, and the second portion of the first end frame is fixedly connected to the floor;
a second end frame comprising a first portion and a second portion, wherein the first portion of the second end frame is rotatably connected to the second portion of the second end frame, and the second portion of the second end frame is fixedly connected to the floor;
a first side panel, comprising a first portion and a second portion, wherein the first portion of the first side panel is rotatably connected to the second portion of the first side panel, and the second portion of the first side panel is fixedly connected to the floor;
a second side panel, comprising a first portion and a second portion, wherein the first portion of the second side panel is rotatably connected to the second portion of the second side panel, and the second portion of the second side panel is fixedly connected to the floor;
a roof panel, rotatably connected to either the first portion of the first side panel or the first portion of the second side panel;
a third side panel, comprising a first portion and a second portion, wherein the first portion of the third side panel is rotatably connected to the second portion of the third side panel, such that the third side panel and the first end frame are configured to rotate independently about a common axis; and, optionally,
a fourth side panel, comprising a first portion and a second portion, wherein the first portion of the fourth side panel is rotatably connected to the second portion of the fourth side panel, such that the fourth side panel and the second end frame are configured to rotate independently about a common axis.
